# EUROPEAN PATENT APPLICATION

(11) **EP 1 464 597 A1**
(43) Date of publication of application: **06.10.2004**
(21) Application number: 04013206.0
(22) Date of filing: 09.07.2001
(51) Int. Cl.: B65G 47/90, B65B 21/20, B65G 41/00

(54) **A head for transferring containers, in particular bottles, within a palletiser**

(30) Priority: 12.07.2000 IT PR20000041; 04.06.2001 IT PR20010036
(62) Divisional of application: 01971757.8
(71) Applicant: Lanfranchi S.R.L., 43044 Collecchio (Parma) (IT)
(72) Inventor: Lanfranchi, Mario, 43044 Collecchio (Parma) (IT); Cattani, Davide, 43036 Fidenza (Parma) (IT)
(74) Representative: Guareschi, Antonella

(57) **Abstract**

A transfer device within a pallettiser (2), of the type which comprises a transfer hand (1) with a plurality of channels (6) each of which comprising two support plates (16) and suspending containers (3), the channels (6) being moveable in a perpendicular direction to the container reception direction of the channels (6), between a first, container (3) receiving position and a second, container (3) packing position, the channels (6) being connected operationally to transfer means which move the channels between the first, receiving position and the second, packing position, said transfer means being structured in such a way as to vary the movement of the channels (6) according to the size of the containers (3), the transfer head (1) further comprising means for coupling to a portion of a support frame (12) of a conveyor (13) for containers (3), thus guaranteeing alignment of the channels (6) and the conveyor (13), the coupling means being shaped in such a way as to make the head integral with a rack (14) which is engaged with the support frame (12) in such a way as to be able to slide in the plane of the channels and perpendicular to the same.

## Description

### Technical field

The present invention relates to a head for transferring containers, in particular plastic bottles, within a palletiser.

### Background Art

The palletisers currently known are substantially made in such a way as to generate right-angled linear movements along Cartesian axes, in order to transfer containers, in particular bottles, between at least one infeed line and at least one outfeed line. In this particular case, the palletiser is positioned in the container handling area and, in particular, in the bottling sector for palletising empty bottles made of plastic, such as PET for example.

The bottles arrive from a set of conveyors, normally pneumatic conveyors, in which they are arranged in several rows, and are picked up by the palletiser with Cartesian axes, which is fitted with a transfer head designed to grip the bottles by the neck and transfer them to the outfeed line. On the infeed line, the rows of bottles are distanced from one another, whilst on the outfeed line they must be packed together in order to reduce the space occupied and to allow them to be packaged and transferred.

For this purpose, the commonly known palletisers have a first head that simply transfers the bottles onto a belt designed to pack them whilst a second head transfers the packed bottles to the outfeed line. The commonly known kind of palletisers have several major drawbacks.

Firstly, the entire system is unreliable because, between the infeed line and the outfeed line, the bottles are released by the first head so that they can be picked up by the second head.

Secondly, the structure of the palletiser is quite complex because it comprises a first head for the transfer of rows which have not been packed and a second head for the transfer of packed rows. Moreover suitable packing means are required, normally consisting of a belt and a stop.

In addition to these disadvantages, problems may arise due to a size changeover in which both the kind of packing and the number of containers packed vary even though the final space occupied must be the same.

### Disclosure of Invention

The aim of the present invention is therefore, to overcome the above-mentioned drawbacks by providing a head which transfers items within a palletiser, which simplifies and increases the reliability of the container transfer and packing, reducing the structural components of the said palletiser.

A further aim of the present invention is to provide a transfer head which adapts easily and rapidly with each size changeover, as long as the bottle neck dimensions are the same.

These aims are fully achieved by the transfer head within a palletiser disclosed, whose characteristics are indicated in the claims herein, and in particular in that it comprises a plurality of channels for receiving containers suspended by their necks. The channels move in a perpendicular direction to the direction in which they receive the containers, between a first, receiving position and a second, container packing position.

This feature and others are more clearly illustrated in the detailed description which follows, with reference to the accompanying drawings, which illustrate a preferred embodiment without limiting the scope of application, and in which:
- Figures 1, 2 and 3 are schematic plan views of a palletiser head in the container receiving position;
- Figures 4, 5 and 6 are schematic plan views of the head illustrated in Figures 1, 2 and 3, in the container packing position;
- Figures 7, 8 and 9 illustrate a detail from Figures 1, 2 and 3;
- Figure 10 is a plan view of a palletiser comprising the head illustrated in Figures 1 to 9;
- Figure 11 is a side view of a palletiser comprising the head illustrated in Figures 1 to 9;
- Figures 12 and 13 are perspective views, from above, of a detail of an embodiment of the head illustrated in Figure 1, in two operating positions;
- Figure 14 and 15 are perspective views, from above, of a detail of an embodiment of the head illustrated in Figure 1, in two operating positions;
- Figure 16 is a perspective view, from above, of a support frame for the container conveyor;

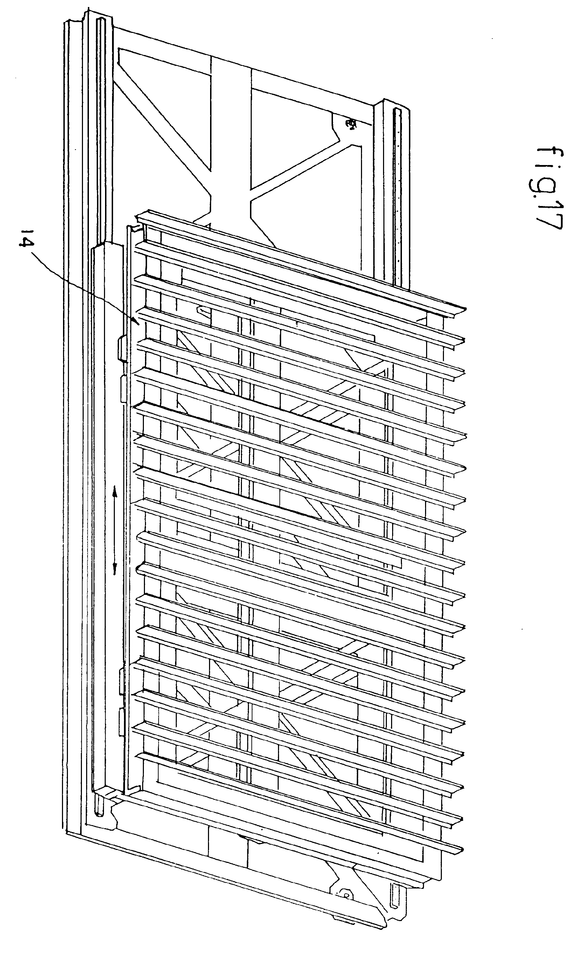

- Figure 17 is a perspective view, from above, of a rack attached to the frame illustrated in Figure 15 and to the head illustrated in Figure 1;
- Figure 18 shows a plan view of a transfer head according to a possible embodiment;
- Figure 19 shows a lateral view of the transfer head shown in Figure 18;
- Figure 20 shows an enlarged frontal view and a section of a constructional detail of the transfer head shown in Figure 18;
- Figure 21 shows a partially sectioned and enlarged lateral view of the transfer head as shown in Figure 18 in a first operative configuration;
- Figure 22 shows a frontal view of the detail shown in Figure 21, in a second operative configuration;

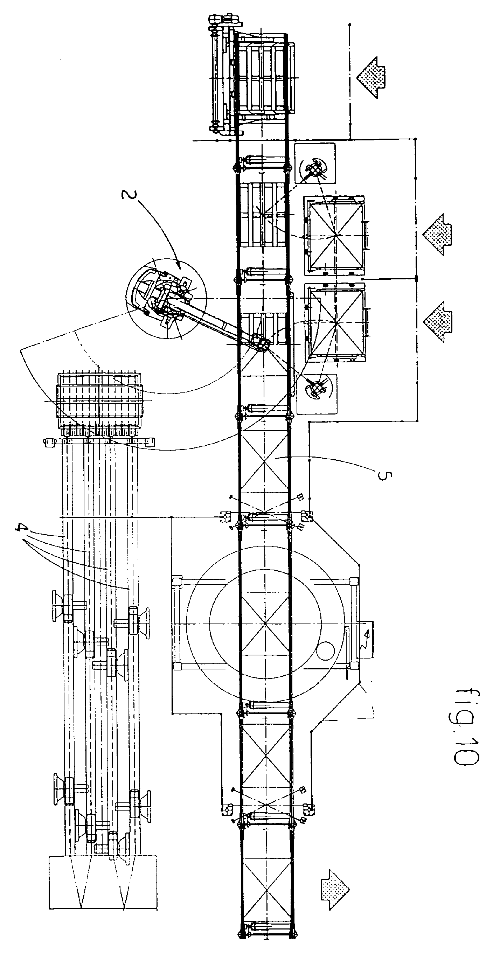

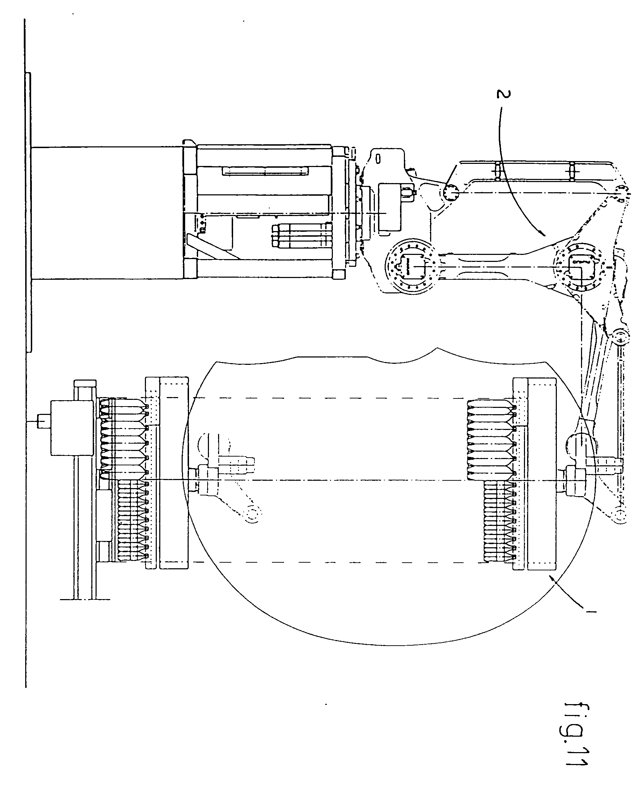

With reference to Figures 10 to 15, 1 indicates a transfer head which is part of a palletiser 2 for containers, in particular bottles 3. In the embodiment described, the transfer head is made using a known type of robot.

As illustrated in Figure 10, the palletiser 2 receives the bottles 3 from a plurality of infeed lines 4 and transfers them, in a tightly packed configuration in order to reduce the space occupied, to an outfeed line 5.

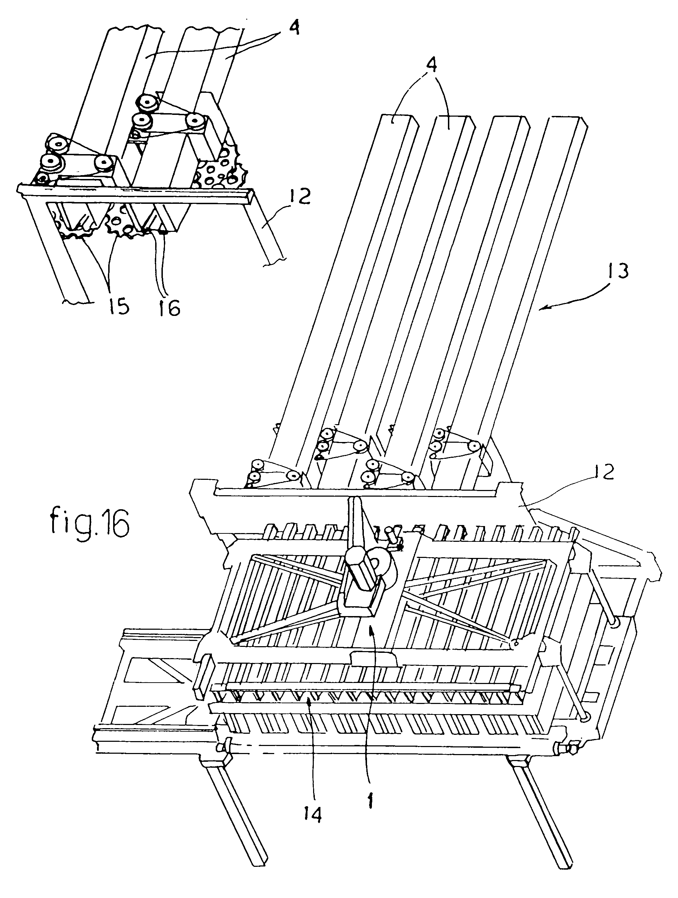

As illustrated in Figure 16, the infeed lines 4 consist of air-powered conveyors in which the bottles, held by a protruding ring located below the neck, run in rows.

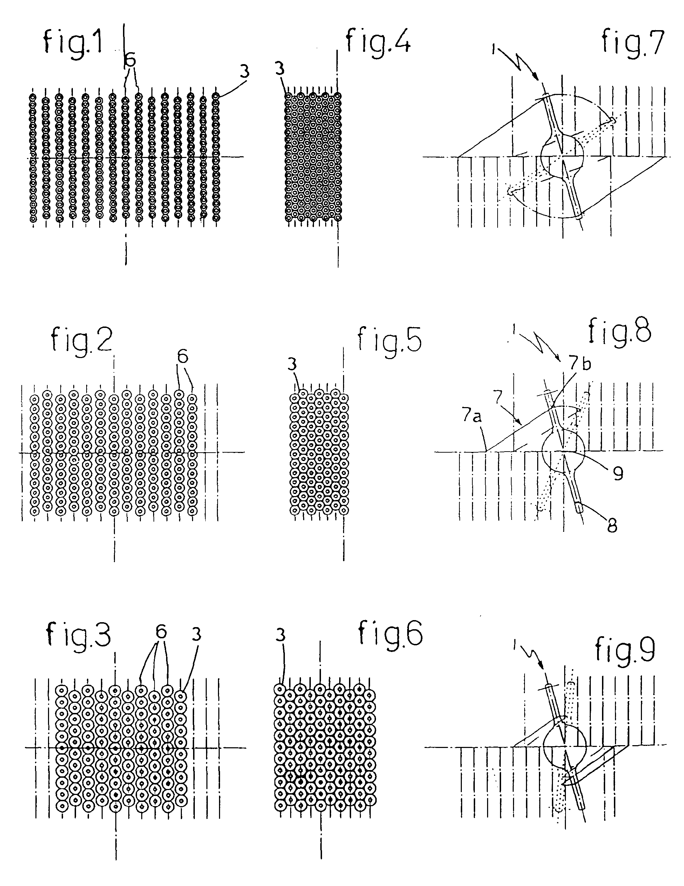

The transfer head 1 comprises a plurality of channels 6 designed to receive the containers suspended by the neck. In Figures 1 to 3 the channels 6 are illustrated schematically using dashed lines which indicate the direction in which the transfer head receives the containers. In particular, in the embodiment illustrated, there is a plurality of channels 6 whose use depends on the size of the bottles 3.

As illustrated in Figure 1, all the channels 6 are activated for 0.5-litre bottles and therefore, the transfer head 1 transfers and packs seventeen rows of bottles. Only thirteen central channels are used for 1.5-litre bottles, to obtain the same packed bottle dimensions.

Finally, for 2-litre bottles, the number of channels 6 activated is further reduced to ten, due to the increase in the transversal dimensions of the bottle.

Figures 8, 9, 12, 13 and 14 illustrate several possible embodiments of the head, showing the position of the bottles in the channels 6.

The channels 6 move in a perpendicular direction to the direction in which the channel 6 receives the containers 3, and in particular they move from a first, receiving position, illustrated in Figures 1 to 3 and Figure 12, to a second, packing position, illustrated in Figures 4 to 6 and Figure 13. The latter position is also referred to as 'quincuncial', i.e. in which the rows ofbottles are arranged side-by-side and offset by one another so as to occupy the least possible space.

As illustrated in Figures 7 to 9, the channels 6 have tie rods 7, each with a first end 7a integral with a channel 6 and a second end 7b connected operationally to a connecting rod 8 mounted on the head and rotating about a point 9.

The rotation of the connecting rod 8 causes the channels 6 to move over by a distance which depends on the angle of rotation of the connecting rod. In this way, the channels 6 may be moved towards and away from one another, moving from the receiving position to the packing position and vice versa.

As illustrated in Figures 7 to 9, the first ends 7a of the tie rods are integral with the channels 6, whilst the second ends 7b are connected to the connecting rod 8. Therefore, when the connecting rod rotates about the point 9, the channels 6 and, as a result the rows of bottles 3, also move.

The tie rods 7 and connecting rod 8 constitute means of moving the channels 6 between the first, container 3 receiving position and the second, packing position.

Advantageously, the connecting rod 8 is driven by a brushless motor, not illustrated, causing it to rotate about the point 9 by an angle which causes the channels 6 to move from the container 3 receiving position to the packing position.

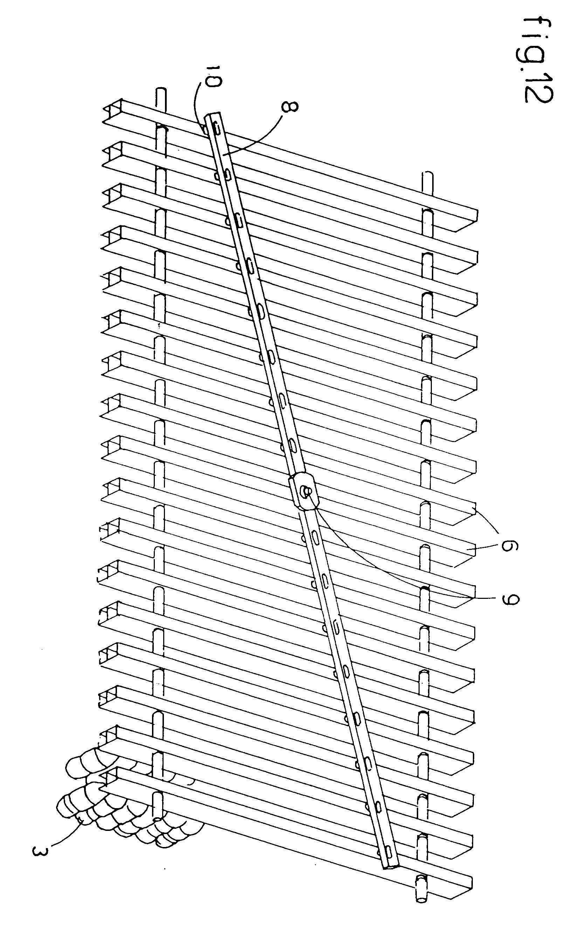

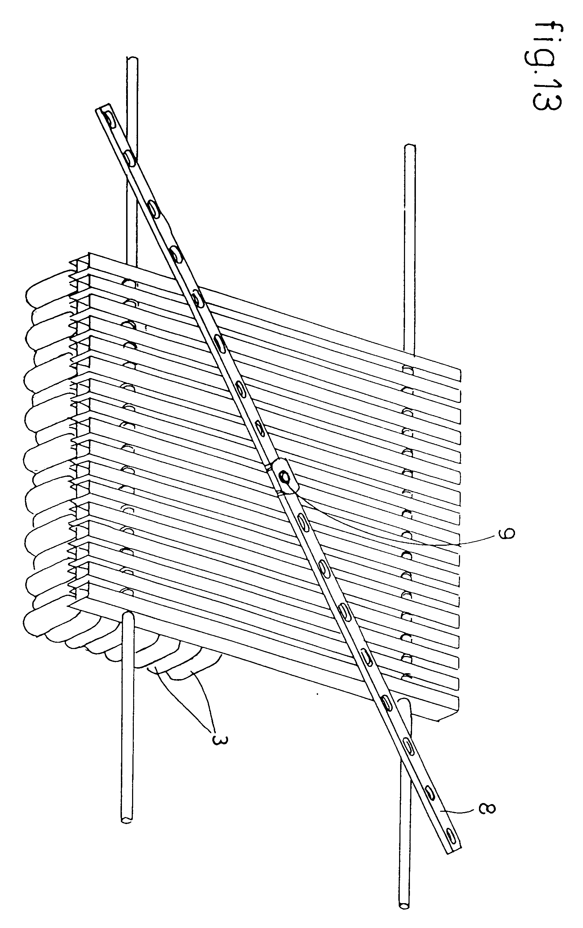

A comparison of Figures 7 to 9 reveals that the angle of rotation of the connecting rod 8 varies according to the size of the bottles 3 and how closely they need to be packed. The most extensive rotation of the connecting rod corresponds to the smallest bottle size. Figures 12, 13 and 14 illustrate two more possible embodiments. In particular, in Figures 12 and 13, the connecting rod 8 is mounted in such a way as to rotate on the head 1 about the point 9. Each channel 6 comprises an element 10 which is engaged with the connecting rod 8 in such a way as to be able to slide, so that a rotation of the connecting rod results in the channels 6 being moved towards and away from one another, from the receiving position to the packing position and vice versa.

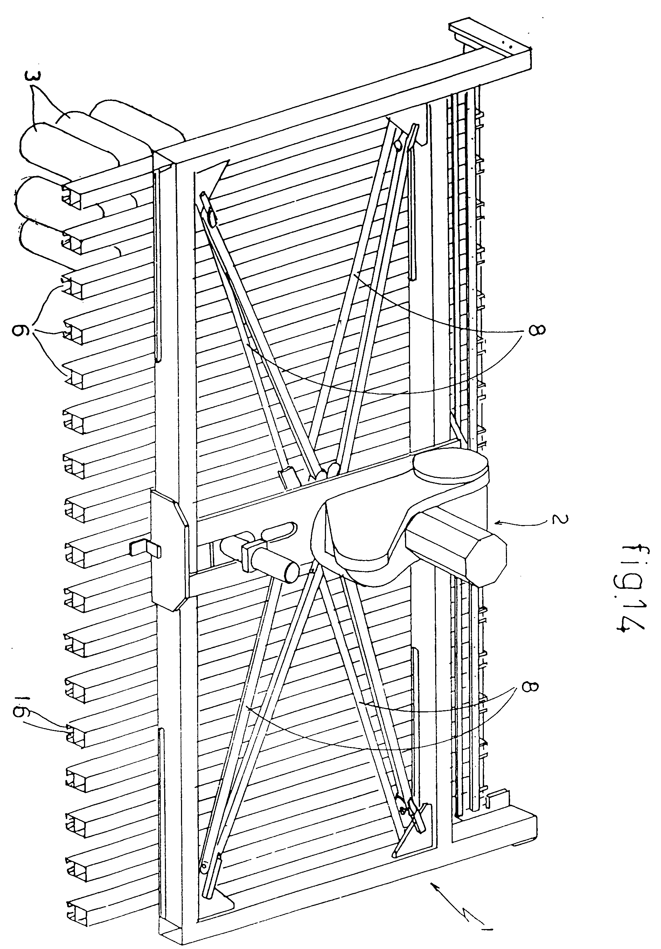

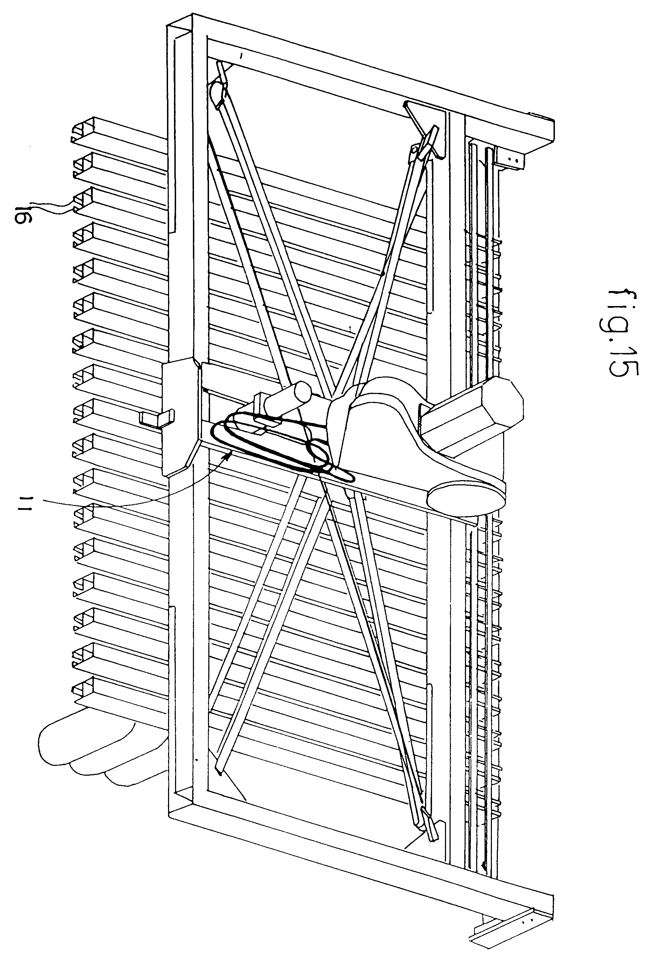

Figures 14 and 15 illustrate two connecting rods 8, mounted on the head 1 in such a way as to rotate and extending over approximately half the length of the head. Two identical connecting rods are fitted on the other half of the head 1. Each pair of connecting rods rotates about the point 9, in a scissor-like movement in order to move the channels 6 towards or away from one another. A driver device 11 consisting of a set of pulleys and belts, not fully illustrated, is advantageously provided for transmitting motion to the two connecting rods.

The connecting rods illustrated in Figures 12 to 14, with the relevant elements 10 constitute means for moving the channels 6 between the first, container 3 receiving position and the second, packing position.

Figure 16 illustrates a support frame 12 for a container 3 conveyor 13, preferably an air-powered conveyor. There are fewer infeed lines 4 constituting the conveyor 13 than channels 6. Figure 16 illustrates four infeed lines 4. In order to fill the necessary number of channels 6, depending on the size of the containers, the head 1 moves alongside the frame 12, aligning those channels which are still empty with the infeed lines 4.

To guarantee correct alignment between the channels 6 and the infeed lines 4, there are means, not illustrated, of coupling to a portion of the support frame 12. In particular, while the channels receive the containers from the infeed lines 4, the head slides, simultaneously with a rack 14, alongside the frame 12 and position itself below the head 1 to hold the body of the containers 3.

The movement of the head and rack is identical and may be independent or linked.

The rack 14 is designed to guide the bottles and guarantee, within the handling system, a suitable cycle and correct interfacing ofthe head and the four bottle feed air conveyors.

When it is coupled with the head correctly, the rack 14, synchronised with the starwheels and the robot, begins the stage in which the bottles are inserted into the first four channels of the head.

Upon completion of this stage, the rack 14 performs a suitable sideways movement, allowing another four channels of the head to be lined up for subsequent bottle insertion.

When bottle feed to the head is complete, i.e. when a full layer of bottles is obtained, the robot releases the head from the rack vertically and transfers it to a position in which its axle is aligned with that of the pallet where, with the aid of a centring device, it deposits the layer by opening the mobile bottle support guides.

The rack 14, consisting, for example, of an extremely strong trolley mounted on linear guides and driven by a brushless motor connected to a lead screw with recirculating balls, guarantees the movements and precision required for the application.

For each of the infeed lines 4 there are also two starwheels 15, which can be power-driven or not, whose recesses grip the body of the containers 3, counting them and preventing thrust from the containers upstream.

Moreover, the channels 6 comprise two support plates 16 which the ring protruding from the neck of the containers 3 rests on. These plates are mounted in such a way as to rotate along the walls of the channels, allowing the containers to be unloaded in the closely packed configuration. In this configuration, the support plates 16 are hinged to the walls of the channels 6. In this way, when the plates 16 are in the horizontal position, the necks of the containers are held inside the channels, whilst when the plates 15 rotate by approximately 90° (preferably 80 - 90°) and are substantially vertical, the containers are released into the closely packed configuration on the outfeed line 5.

The transfer head disclosed has important advantages. Firstly, it allows time to be saved, since the packing operation is simultaneous with the transfer operation from the infeed lines to the outfeed lines. Secondly, it noticeably simplifies the structure of the palletiser, ensuring there are no bottle packing outside the transfer head.

The above-mentioned operations are performed by a single head which is original as it performs several functions and can automatically adapt to different sizes by simply varying the angle of rotation of the connecting rod 8.

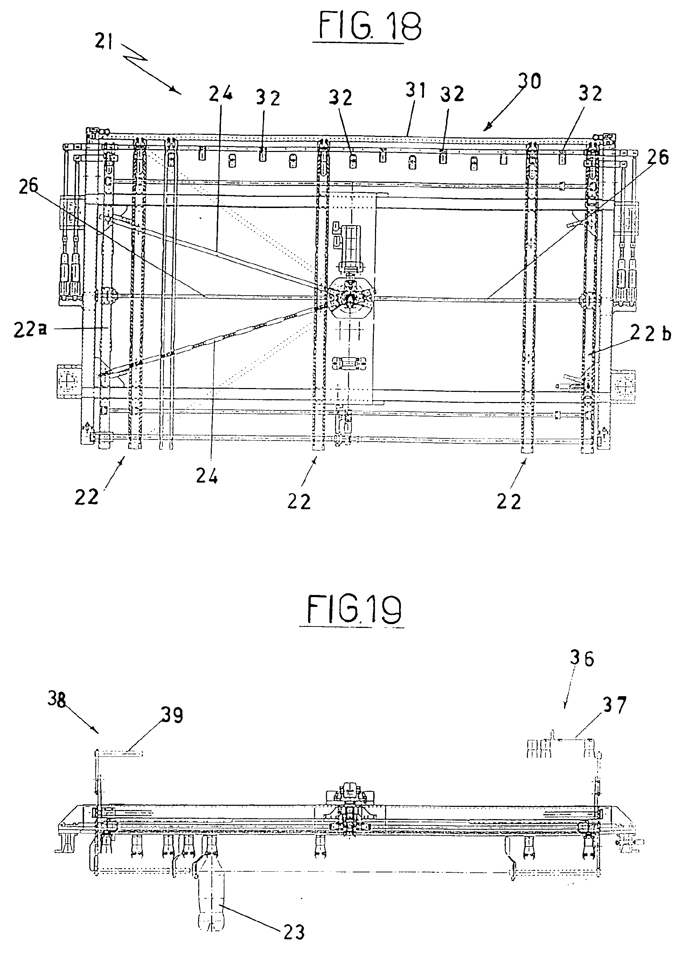

With reference to Figure 18, the head for transferring containers within a palletiser according to a possible embodiment is indicated as a whole as 21.

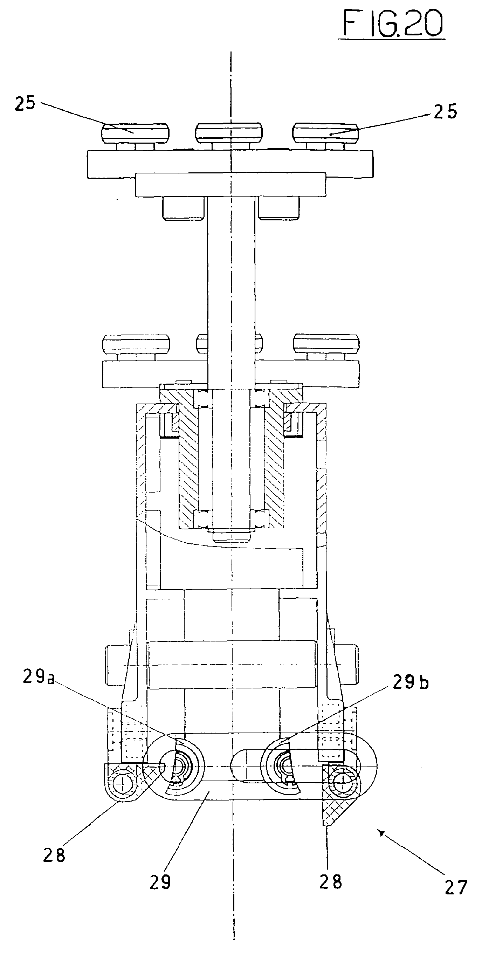

The transfer head 21 comprises a plurality of channels 22 (only some are illustrated) shaped in such as way as to receive the containers, in particular bottles 23, fed by at least one feeder line (not illustrated in the figure). These channels 22 move in a substantially perpendicular direction to the feeder line. The movement of the channels 22 is made possible by two pairs of rods 24 (only one of the pairs is illustrated in the figure) each one having a first end hinged onto the said pin positioned substantially in the centre of the transfer head 21 and a second end which is fastened (in such a way as to be able to slide) to end channels 22a, 22b located on the sides opposite the transfer head. Each rod substantially constitutes a link and operates actively on the remaining channels to cause them to move as necessary for the palletisation process. In particular, the said rods 24 are connected to the remaining channels of the transfer head by means of supports fitted with rollers 25 (figure 20). The end channels 22a, 22b are driven by the two connecting rods 26, each of which is fitted, at one end, with a lead screw which operates actively on the said end channels in position with their centre line. These connecting rods 26 cause the lateral movement of the channels 22a, 22b which, by the effect of the rods 24, force the remaining channels to move together, thus packing the bottles 23.

With reference to Figure 20, the transfer head 21 is fitted with gripping/releasing means 27 which operate actively on the containers in each channel 22 connected to it. The said gripping/releasing means 27 are shaped in such as way as to hold each bottle 23 by its neck and comprise at least one pair of gripping portions 28 which operate actively on the bottleneck. These gripping portions 28 are fastened to each channel 22 in such a way as to be able to rotate by a pre-set angle to release each bottle. In particular, the gripping portions 28 rotate by a pre-set angle between a first operative position, in which they are substantially horizontal and hold the bottles by the neck, and a second operative position in which the said gripping portions 28 are substantially vertical and allow the containers to be unloaded.

The gripping/releasing means 27 comprise at least one body 29 connecting the said gripping portions 28 to allow them to rotate by a pre-set angle and prevent the bottles being obstructed during the bottle 23 gripping/releasing phase. In fact, this connection body 29 prevents the gripping portions 28 rotating by more than a critical angle beyond which they can no longer be brought back to the horizontal position.

The gripping/releasing means comprise at least one pair of rolling elements 29a, 29b, preferably ball bearings, fastened to the said connection body 29; in particular, this connection body 29 is substantially a plate with a hole and a slot at which point the bearings 29a, 29b are fastened.

With reference to Figure 18, the transfer head 21 also comprises means 30 of rotating the gripping portions 28 simultaneously. These means 30 comprise a rod-shaped body 31 with a longitudinal groove shaped in such a way as to permit the simultaneous housing of the bearings 29a, 29b present on all the gripping/releasing means 27. In the embodiment illustrated, the rod-shaped body 31 moves with a reciprocating motion in a substantially vertical direction and it is driven by a form of motorization which is commonly known and is not therefore illustrated.

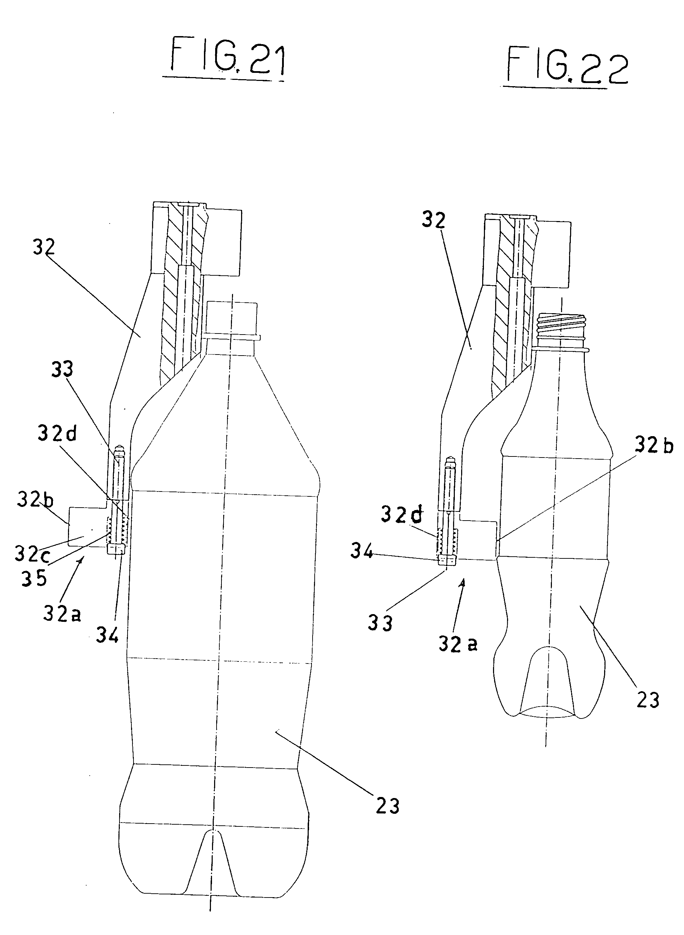

With reference to Figures 18, 22 and 23, the transfer head 21 comprises a plurality of stopping elements 32, each of which is located in position with one end of each channel 22, in a staggered position in relation to the stopping elements present on the adjacent channels. These stopping elements 32 have at least one mobile portion 32a which rotates about an axle 33, the said portion being substantially vertical and shaped in such a way as to adapt to different-shaped containers, in order to allow the side-by-side and staggered alignment. In particular, this mobile portion 32a has at least three stopping surfaces 32b, 32c, 32d with different, pre-determined dimensions, against which the containers in each channel rest; these surfaces 32b, 32c, 32d, are brought into the operative configuration by the rotation of the mobile portion 32a about the axle 33, made possible by a screw 34 connected to a spring 35. The stopping surfaces 32b, 32c, 32d begin their function alternatively depending on the size of the containers.

With reference to Figure 19, the transfer head 21 also comprises means 36 shaped in such a way as to impose a predetermined distance between the channels 22 to make them coincide, while being moved, with the feeder line.

In the embodiment shown, these means 36 comprise a plurality of belts 37 interposed between pairs of adjacent channels 22 and connected to the said channels.

With reference to Figure 19, the transfer head 21 also comprises means 38 for holding the containers in the channels 22 after the said containers have been packed together through the movement of the channels. In the embodiment illustrated, the said means 38 comprise at least one bar 39 that moves, with reciprocating motion, in a substantially circular direction between at least a first operative position, in which the said bar is completely raised, and at least a second operative position, in which the said bar 39 is completely lowered and locks all the containers in the channels 22. The presence of this bar 39 is fundamental while the transfer head is moving between a container infeed line and an outfeed line.

The object of the present invention functions in the following way.

Once the bottles 23 that are inside the channels 22 have been packed together, the bearings 29a, 29b move into the groove running along the rod-shaped body 31 which, moving downwards and therefore dragging the bearings with it, causes the gripping portions 28 to rotate and consequently releases the bottles. Next, the rod-shaped body 31 moving upwards and taking with it the bearings, determines the re-positioning of the gripping portions 28, arranging them to receive the next bottles.

Depending on the size of the bottles 23, which are usually half litre, one litre and two litre, the portion 32a of each stopping element 32 is rotated in order to bring one of the stopping surfaces into the operative configuration and to allow the bottles to be aligned and staggered inside the transfer head.

The invention has two important advantages.

First of all, the gripping/releasing means 27 produced as indicated above are capable of reducing or eliminating any risk of the bottles being obstructed, especially after the container unloading phase and the consequent repositioning of the gripping portions 28.

Secondly, thanks to the presence of the rod-shaped body 31, the gripping/releasing means 27 guarantee the movements ofthe gripping portions 28 are simultaneous during the bottle 23 unloading phase. Advantageously, the stopping elements 32 make it possible to align and stagger the bottles 23, regardless of their size.

A further advantage is represented by the presence of the belts 37, which make it possible to impose a pre-determined distance between the channels 22, making them coincide with the feeder line.

Advantageously, the presence of the bar 39 to hold the containers in place ensures the transfer head functions extremely accurately and allows it to move between the container infeed line and outfeed line quickly.

## Claims

1. A transfer head (1) within a palletiser (2), of the type which comprises a plurality of channels (6) each of which comprising two support plates (16) and suspending containers (3) the channels (6) move in a perpendicular direction to the container reception direction of the channels (6), between a first, container (3) receiving position and a second, container (3) packing position, the channels (6) are connected operationally to transfer means which move the channels between the first, receiving position and the second, packing position, said transfer means being structured in such a way as to vary the movement of the channels (6) according to the size of the containers (3), **characterised by** the fact that it comprises means of coupling to a portion of a support frame (12) of a convenyour (13) for containers (3), thus guaranteeing alignment of the channels (6) and the conveyor (13), the coupling means being shaped in such a way as to make the head integral with a rack (14) which is engaged with the support frame (12) in such a way as to be able to slide.

2. A head according to claim 1., **characterised by** the fact that the transfer head (1) and the rack (14) are powered by independent motors but move at the same speed.
